# EUROPEAN PATENT APPLICATION

(11) **EP 4 773 558 A1**
(43) Date of publication of application: **08.07.2026**
(21) Application number: 24869697.3
(22) Date of filing: 26.04.2024
(51) Int. Cl.: H04L 27/26

(54) **DATA TRANSMISSION METHOD, DEVICE, AND STORAGE MEDIUM**

(30) Priority: 27.09.2023 CN 202311290369
(71) Applicant: ZTE Corporation, Shenzhen, Guangdong 518057 (CN)
(72) Inventor: HUA, Jian, Shenzhen, Guangdong 518057 (CN); XIN, Yu, Shenzhen, Guangdong 518057 (CN); BAO, Tong, Shenzhen, Guangdong 518057 (CN)
(74) Representative: Aipex B.V.
(86) International application number: PCT/CN2024/090002
(87) International publication number: WO 2025/066128

(57) **Abstract**

Provided are a data transmission method, a device, and a storage medium. The data transmission method includes dividing to-be-transmitted data into N first sequences, where the n-th first sequence includes k(n) data elements, k(n) is a positive integer, n = 1, 2, ..., N, and N is an integer greater than or equal to 2; performing zero-padding at both ends, cyclic shifting, and inverse Fourier transform on the N first sequences in sequence to obtain a target time-domain data sequence; and transmitting the target time-domain data sequence on a preconfigured time-frequency resource.

## Description

### TECHNICAL FIELD

The present application relates to the field of communication technologies, for example, a data transmission method, a device, and a storage medium.

### BACKGROUND

In 5G communication technology, cyclic prefix-orthogonal frequency division multiplexing (CP-OFDM) is used as the fundamental waveform, and different parameter sets (Numerology) may be used between two adjacent subbands, destroying the orthogonality between subcarriers and bringing a new interference problem. To address the interference problem, one relatively straightforward approach is to insert a guard band between two transmission bands having different Numerologies; however, this approach wastes frequency resources. It is urgent to solve the problems of how to design a unified waveform architecture to flexibly integrate multiple waveforms and how to flexibly support applications with different channel bandwidths.

### SUMMARY

Embodiments of the present application provide a data transmission method, a device, and a storage medium, reducing the resources occupied by the guard interval, reducing intersystem or inter-subband interference, and improving spectrum efficiency.

Embodiments of the present application provide a data transmission method.

The method includes dividing to-be-transmitted data into N first sequences, where the n-th first sequence includes k(n) data elements, k(n) is a positive integer, n = 1, 2, ..., N, and N is an integer greater than or equal to 2; performing zero-padding at both ends, cyclic shifting, and inverse Fourier transform on the N first sequences in sequence to obtain a target time-domain data sequence; and transmitting the target time-domain data sequence on a preconfigured time-frequency resource.

Embodiments of the present application provide a communication device. The communication device includes a memory and at least one processor.

The memory is configured to store at least one program. When executed by the at least one processor, the at least one program causes the at least one processor to perform the data transmission method of any previous embodiment.

Embodiments of the present application provide a storage medium storing a computer program which, when executed by a processor, causes the processor to perform the data transmission method of any previous embodiment.

### BRIEF DESCRIPTION OF DRAWINGS

FIG. 1 is a flowchart of a data transmission method according to embodiments of the present application.
FIG. 2 is a flowchart of generating a target time-domain data sequence according to embodiments of the present application.
FIG. 3 is a flowchart of generating a target time-domain data sequence according to embodiments of the present application.
FIG. 4 is a flowchart of generating a target time-domain data sequence according to embodiments of the present application.
FIG. 5 is a flowchart of generating a target time-domain data sequence according to embodiments of the present application.
FIG. 6 is a flowchart of generating a target time-domain data sequence according to embodiments of the present application.
FIG. 7 is a flowchart of generating a target time-domain data sequence according to embodiments of the present application.
FIG. 8 is a flowchart of generating a target time-domain data sequence according to embodiments of the present application.
FIG. 9 is a flowchart of generating a target time-domain data sequence according to embodiments of the present application.
FIG. 10 is a flowchart of transmission of to-be-transmitted data according to embodiments of the present application.
FIG. 11 is a block diagram of a data transmission apparatus according to embodiments of the present application.
FIG. 12 is a diagram illustrating the structure of a communication device according to embodiments of the present application.

### DETAILED DESCRIPTION

Embodiments of the present application are described hereinafter in conjunction with drawings. The present application is described hereinafter in detail in conjunction with embodiments and drawings.

Long-term evolution (LTE) is a 4G (Fourth Generation) wireless cellular communication technology. LTE uses orthogonal frequency-division multiplexing (OFDM) technology. Time-frequency resources formed of subcarriers and OFDM symbols constitute wireless physical time-frequency resources of the LTE system. The OFDM technology has been widely used in wireless communications. By using a cyclic prefix (CP), a CP-OFDM system can effectively address multipath delay issues and divide a frequency-selective channel into a set of parallel flat channels, greatly simplifying channel estimation and providing relatively high channel estimation accuracy. However, the performance of a CP-OFDM system is relatively sensitive to frequency offset and time offset between adjacent subbands, mainly because the system has relatively large spectral leakage, thereby easily causing inter-subband interference. An LTE system uses guard intervals in the frequency domain, resulting in a lower spectral efficiency. Therefore, new technologies are required to suppress out-of-band leakage.

In 5G NR, CP-OFDM is still used as the fundamental waveform, and different Numerologies may be used between two adjacent subbands, destroying the orthogonality between subcarriers and bringing a new interference problem. To address the interference problem, one relatively straightforward approach is to insert a guard band between two transmission bands having different Numerologies; however, this approach wastes frequency resources.

Future 6G services will operate over a wide range of frequency bands and will be deployed in various manners. 6G services require not only multi-bandwidth channels but also waveform schemes suitable for different scenarios. Implementing each waveform scheme independently increases the costs of base stations and terminals. It is urgent to solve the problems of how to design a unified waveform architecture to flexibly integrate multiple waveforms and how to flexibly support applications with different channel bandwidths.

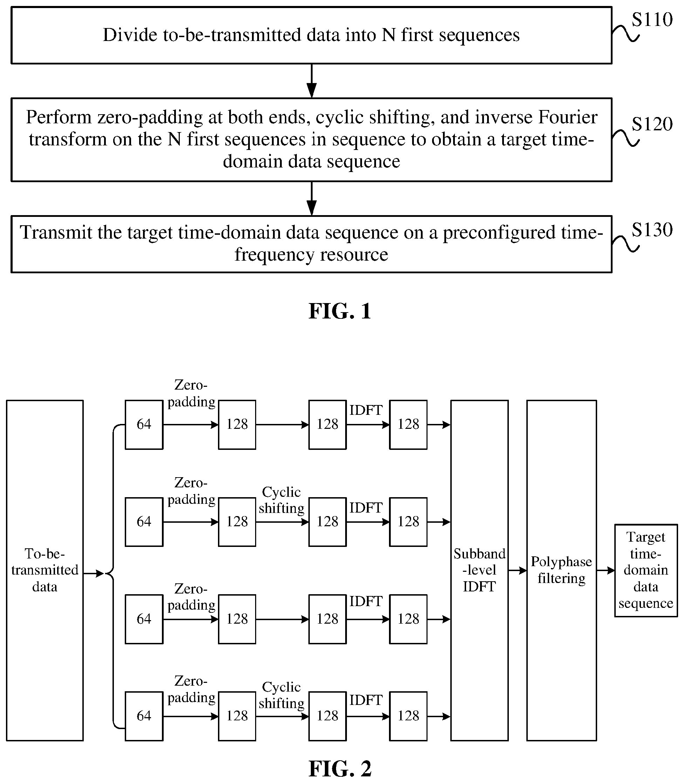

In an embodiment, FIG. 1 is a flowchart of a data transmission method according to embodiments of the present application. This embodiment is applicable to scenarios requiring flexible support for multiple bandwidth channels and multiple waveforms. As shown in FIG. 1, this embodiment includes S110 to S130.

In S110, to-be-transmitted data is divided into N first sequences.

The n-th first sequence includes k(n) data elements, k(n) is a positive integer, n = 1, 2, ..., N, and N is an integer greater than or equal to 2. In an example, the to-be-transmitted data is a data sequence to be sent from a transmitting end to a receiving end. The to-be-transmitted data may be frequency-domain data or time-domain data. In an example, when the to-be-transmitted data is frequency-domain data, the to-be-transmitted data is divided into N first sequences that are also frequency-domain data. In an example, when the to-be-transmitted data is time-domain data, it is feasible to divide the to-be-transmitted data into N data groups that are also time-domain data and then perform Fourier transform on the N time-domain data groups to obtain N first sequences; or it is feasible to perform Fourier transform on the to-be-transmitted data to obtain frequency-domain data and then divide the frequency-domain data to obtain N first sequences.

In S120, zero-padding at both ends, cyclic shifting, and inverse Fourier transform are performed on the N first sequences in sequence to obtain a target time-domain data sequence.

In S130, the target time-domain data sequence is transmitted on a preconfigured time-frequency resource.

The to-be-transmitted data is divided into N first sequences, and Zero-padding at both ends, cyclic shifting, and inverse Fourier transform are performed in sequence on the n-th first sequence so that a target time-domain data sequence is formed; and then the target time-domain data sequence is transmitted on the preconfigured time-frequency resource. By performing frequency-domain cyclic shifting on the first sequences after zero-padding at both ends and before inverse Fourier transform, it is possible to align the data mapped to each subband with the frequency-domain index of the subband, such that the data is accurately mapped to the corresponding subband index during subsequent filtering.

In an embodiment, performing zero-padding at both ends, cyclic shifting, and inverse Fourier transform on the N first sequences in sequence to obtain the target time-domain data sequence includes performing zero-padding at both ends on the N first sequences separately to obtain N second sequences, where each second sequence includes M*s(n) data elements, M is a positive integer, and s(n) ≥ k(n); performing cyclic shifting on the N second sequences separately to obtain N third sequences; performing inverse Fourier transform on the N third sequences to obtain N fourth sequences; and performing inverse Fourier transform on the N fourth sequences to form the target time-domain data sequence.

Specifically, performing zero-padding at both ends, cyclic shifting, and inverse Fourier transform on the N first sequences in sequence to obtain the target time-domain data sequence includes performing zero-padding at both ends on the N first sequences separately to obtain N second sequences, where each second sequence includes M*s(n) data elements; performing cyclic shifting on the N second sequences separately to obtain N third sequences; M*s(n)-point inverse Fourier transform is performed on the third sequences separately to form N fourth sequences; inverse Fourier transform is performed on the N fourth sequences to form a target time-domain data sequence; and then the target time-domain data sequence is transmitted on a time-frequency resource.

In an embodiment, a channel bandwidth includes N subbands that correspond to the N first sequences one to one.

In an embodiment, the cyclic shifting is performed within a range obtained after zero-padding at both ends of each first sequence, where the range of the cyclic shifting is greater than k(n). Cyclic shifting is performed on the N second sequences separately. The operation range of the cyclic shifting is greater than k(n). That is, the cyclic shifting is performed within the range after zero-padding at both ends is performed on the first sequences. Since the first-level IFFT involves oversampling, the actual cyclic shifting range should be the range of the first-level IFFT, that is, greater than k(n).

In an embodiment, the cyclic shift amount of the n-th second sequence is related to the zero-frequency index of a channel bandwidth and the frequency-domain index corresponding to the n-th first sequence. The cyclic shift amount may be configured according to the subband index within the channel bandwidth.

In an embodiment, in response to the zero-frequency index of a channel bandwidth falling within y(n) subcarrier indices preceding an index of a zero subcarrier to which a data element of the n-th first sequence is mapped during inverse Fourier transform, the n-th second sequence is circularly shifted backward by [y(n) mod M * s(n)] data elements, where y(n) is a real number greater than or equal to 0.

In an embodiment, in response to the zero-frequency index of a channel bandwidth falling within y(n) subcarrier indices following an index of a zero subcarrier to which a data element of the n-th first sequence is mapped during inverse Fourier transform, the n-th second sequence is circularly shifted forward by [y(n) mod M * s(n)] data elements, where y(n) is a real number greater than or equal to 0. In an example, a relationship between the cyclic shift amount and the subband index may be provided.

In an embodiment, in response to the cyclic shift amount of the n-th second sequence being [y(n) mod M * s(n)], no cyclic shifting is performed on the n-th second sequence. For a subband that satisfies the condition, cyclic shifting is not required.

In an embodiment, the zero-frequency index of the channel bandwidth satisfies one of the zero-frequency index of a baseband; or a zero-frequency index during the inverse Fourier transform on each third sequence. In an example, the zero-frequency index of the channel bandwidth is the zero-frequency index of the baseband. In an example, the zero-frequency index of the channel bandwidth is the zero-frequency index for inverse Fourier transform on each third sequence.

In an embodiment, each first sequence includes k(n) data elements, and k(n) satisfies one of the following conditions: any positive integer; an integer multiple of one resource block (RB); 2 to the power of i; the ratio of two adjacent k(n) values is 2 to the power of i; or all k(n) values are the same. Each first sequence includes k(n) data elements. In an example, k(n) is any positive integer. In an example, k(n) is an integer multiple of 12, that is, an integer multiple of one RB. In an example, k(n) satisfies 2 to the power of i (2'), where i is an integer greater than or equal to 0. In an example, the ratio of two k(n) values is 2 to the power of i (2'), where i is an integer greater than or equal to 0. In an example, each first sequence includes the same number k(n) of data elements.

In an embodiment, zero-padding at both ends is performed on each first sequence, and [M * s(n) - k(n)]/2 zero data elements are added to each end of each second sequence.

In an embodiment, the number of points for inverse Fourier transform on each third sequence satisfies one of the following conditions: the ratio of the numbers of points for inverse Fourier transform on two adjacent third sequences is 2 to the power of i; or the numbers of points for inverse Fourier transform on different third sequences are the same. i is an integer. In an example, M*s(n)-point inverse Fourier transform is performed on the third sequences separately, and the ratio of the numbers of points for inverse Fourier transform on two adjacent third sequences is 2 to the power of i (2ⁱ), where i is an integer greater than or equal to 0. In an example, M*s(n)-point inverse Fourier transform is performed on the third sequences separately, and the numbers of points for inverse Fourier transform on different third sequences are the same.

In an embodiment, the to-be-transmitted data includes at least constellation point modulated data, and the to-be-transmitted data also includes at least one reference signal data element. In an embodiment, the to-be-transmitted data may include constellation point modulated data. In an embodiment, the to-be-transmitted data includes constellation point modulated data and at least one reference signal data element.

In an embodiment, performing inverse Fourier transform on the N fourth sequences to form the target time-domain data sequence includes performing frequency-domain zero-padding and cyclic shifting on P initial frequency-domain data sequences in sequence to obtain P other target frequency-domain data sequences; and performing inverse Fourier transform on the N fourth sequences and the P other target frequency-domain data sequences to form the target time-domain data sequence. The P other target frequency-domain data sequences include data obtained by M-fold frequency-domain oversampling and are not included in data sequences generated from the to-be-transmitted data. In an example, inverse Fourier transform is performed on the N fourth sequences and the P other target frequency-domain data sequences to form the target time-domain data sequence. The P other initial frequency-domain data sequences may be data obtained by M-fold frequency-domain oversampling or may be data sequences not generated from the to-be-transmitted data. In an example, frequency-domain zero-padding and cyclic shifting are performed in sequence on P other initial frequency-domain data sequences to obtain P other target frequency-domain data sequences; and then, inverse Fourier transform is performed on the N fourth sequences and the P other target frequency-domain data sequences to form the target time-domain data sequence.

In an embodiment, performing inverse Fourier transform on the N fourth sequences to form the target time-domain data sequence includes for every N data elements, one oversampled inverse Fourier transform is performed, where the N data elements are from the N third sequences one to one. In an example, performing inverse Fourier transform on the N fourth sequences includes for every N data elements, one oversampled inverse Fourier transform is performed, where the N data elements are from the N fourth sequences one to one.

In an embodiment, the target time-domain data sequence is formed by concatenating initial time-domain data sequences generated from inverse Fourier transforms on the fourth sequences, where the number of initial time-domain data sequences is equal to the number of the inverse Fourier transforms on the fourth sequences. An initial time-domain data sequence is sub-symbols obtained by an oversampled inverse Fourier transform on a fourth sequence. In an embodiment, an oversampled inverse Fourier transform is performed on N data elements in the fourth sequence to obtain sub-symbols. The sub-symbols are repeatedly extended and then concatenated in the time domain to obtain the target time-domain data sequence.

In an embodiment, an inverse Fourier transform on the fourth sequences to form an initial time-domain data sequence includes extracting N data elements from the N fourth sequences, where the number of the N data elements is the same as the number of the first sequences, and each of the N data elements is from a respective one of the N third sequences; and performing an oversampled inverse Fourier transform on the N data elements to obtain the initial time-domain data sequence. By way of example, assuming that the N fourth sequences are arranged in N rows (that is, one fourth sequence is arranged in one row), then N data elements are selected according to column indices (that is, one column of data is selected), and for every N selected data elements (that is, every column of data), an oversampled inverse Fourier transform is performed. For another example, assuming that the N fourth sequences are arranged in N columns (that is, one fourth sequence is arranged in one column), then N data elements are selected according to row indices (that is, one row of data is selected), and for every N selected data elements (that is, every row of data), an oversampled inverse Fourier transform is performed.

In an embodiment, a concatenation interval of the initial time-domain data sequences is 1/M of a length obtained after oversampled inverse Fourier transform on N target data elements. In an embodiment, the target time-domain data sequence generated by inverse Fourier transform is formed by concatenation, where a concatenation interval between every two adjacent initial time-domain data sequences is have the length obtained after an oversampled inverse Fourier transform on every N target data elements, that is, half the length of a sub-symbol.

In an embodiment, generating the initial time-domain data sequences by the inverse Fourier transforms on the fourth sequences includes for subbands having different subcarrier spacings, using the length of the fourth sequence corresponding to the subband with the minimum subcarrier spacing as a reference length; and for fourth sequences corresponding to subbands with non-minimum subcarrier spacings, selecting at least two fourth sequences, concatenating the at least two fourth sequences to form new N fourth sequences that each have a same length as the reference length, and performing inverse Fourier transforms on the new N fourth sequences to obtain the initial time-domain data sequences. Subbands with different subcarrier spacings represent first sequences including different numbers of data elements.

In an embodiment, each first sequence is transmitted within a frequency-domain resource block, and the frequency-domain resource block includes Z subcarriers; and the number of data elements in each of the N second sequences satisfies one of the following: M*s(n); or a value greater than or equal to M times the number of subcarriers in the frequency-domain resource block. In an example, each of the N second sequences includes M*s(n) data elements; or includes data elements of a number greater than or equal to M times the number of subcarriers in the frequency-domain resource block.

In an embodiment, a zero-frequency index during the inverse Fourier transform on a third sequence is within the range of a corresponding frequency-domain resource block; and zero-frequency indices during inverse Fourier transform on different third sequences are different. In an embodiment, the zero-frequency index refers to a zero subcarrier (that is, the 0th subcarrier or 0-indexed subcarrier) in a frequency-domain resource block.

In an embodiment, a zero-frequency index during the inverse Fourier transform falls at one subcarrier in a frequency-domain resource block. In an embodiment, the zero-frequency index (that is, the zero subcarrier) during the inverse Fourier transform on each original data sequence is a subcarrier in a respective frequency-domain resource block.

In an embodiment, the frequency-domain resource blocks include all or some of the frequency-domain resource blocks within the channel bandwidth; and the to-be-transmitted data includes all or some of the to-be-transmitted data within the channel bandwidth.

In an embodiment, the data transmission method also includes filtering the target time-domain data sequence. The filtering includes one of single-phase filtering or polyphase filtering.

In an embodiment, a filter function used in the polyphase filtering includes one of the following: a root raised cosine function, a raised cosine function, a rectangular function, or an isotropic orthogonal transform algorithm (IOTA) function.

In an embodiment, the data transmission method also includes performing windowing on the target time-domain data sequence.

### Example one

In an example, FIG. 2 is a flowchart of generating a target time-domain data sequence according to embodiments of the present application. This example describes the generation process of the target time-domain data sequence. In this example, 4 first sequences are provided, each first sequence includes 64 data elements, and the zero-padding length is 32 in zero-padding at both ends for each first sequence.

As shown in FIG. 2, the to-be-transmitted data is divided into 4 first sequences. Each first sequence includes 64 data elements. First, 32 zero subcarriers are added to each of both ends of each first sequence to form 4 second sequences, each second sequence having 128 points. It is assumed that the zero-frequency index of the channel bandwidth falls at the index of the zero subcarrier to which the first group of data is mapped during the inverse Fourier transform. The second and fourth groups of data are cyclically shifted backward by 64 data elements to obtain third sequences. Then, 128-point inverse Fourier transform is performed on the third sequences to form 4 fourth sequences. Subsequently, subband-level inverse Fourier transform and polyphase filtering are performed on the 4 fourth sequences to form a target time-domain data sequence. The target time-domain data sequence is transmitted on a time-frequency resource.

### Example two

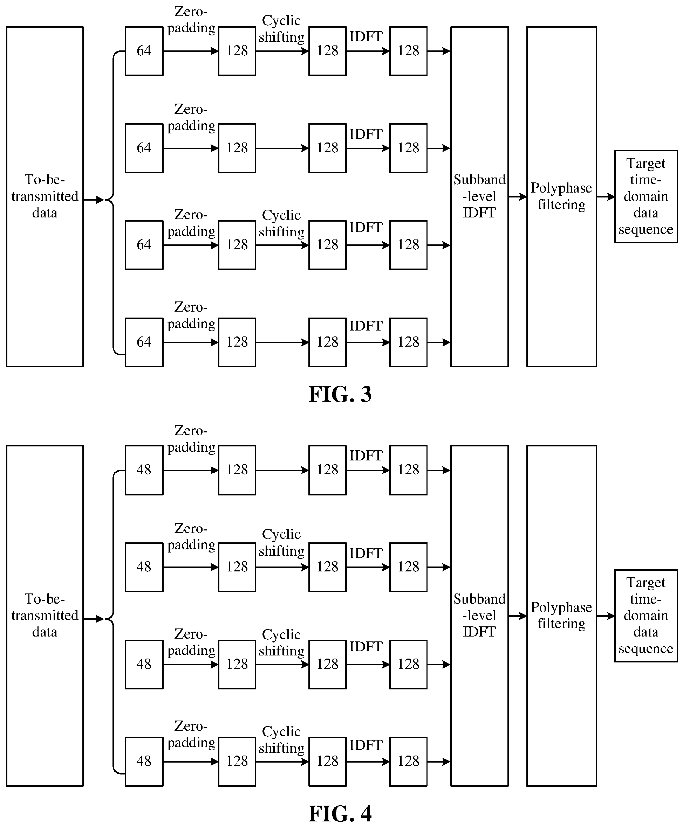

In an example, FIG. 3 is a flowchart of generating a target time-domain data sequence according to embodiments of the present application. This example describes the generation process of the target time-domain data sequence. In this example, 4 first sequences are provided, each first sequence includes 64 data elements, and the zero-padding length is 32 in zero-padding at both ends for each first sequence.

As shown in FIG. 3, the to-be-transmitted data is divided into 4 first sequences. Each first sequence includes 64 data elements. First, 32 zero subcarriers are added to each of both ends of each first sequence to form 4 second sequences, each second sequence having 128 points. It is assumed that the zero-frequency index of the channel bandwidth falls at the index of the zero subcarrier to which the second group of data is mapped during the inverse Fourier transform. The first group of data is cyclically shifted forward by 64 data elements, and the third group of data is cyclically shifted backward by 64 data elements to obtain third sequences. Then, 128-point inverse Fourier transform is performed on the third sequences to form 4 fourth sequences. Subsequently, subband-level inverse Fourier transform and polyphase filtering are performed on the 4 fourth sequences to form a target time-domain data sequence. The target time-domain data sequence is transmitted on a time-frequency resource.

### Example three

In an example, FIG. 4 is a flowchart of generating a target time-domain data sequence according to embodiments of the present application. This example describes the generation process of the target time-domain data sequence. In this example, 4 first sequences are provided, each first sequence includes 48 data elements, and the zero-padding length is 40 in zero-padding at both ends for each first sequence.

As shown in FIG. 4, the to-be-transmitted data is divided into 4 first sequences. Each first sequence includes 48 data elements. First, 40 zero subcarriers are added to each of both ends of each first sequence to form 4 second sequences, each second sequence having 128 points. It is assumed that the zero-frequency index of the channel bandwidth falls at the index of the zero subcarrier to which the first group of data is mapped during the inverse Fourier transform. The second group of data and the third group of data are cyclically shifted backward by 48 data elements and cyclically shifted backward by 96 data elements respectively, and the fourth group of data is cyclically shifted backward by 16 data elements to obtain third sequences. Then, 128-point inverse Fourier transform is performed on the third sequences to form 4 fourth sequences. Subsequently, subband-level inverse Fourier transform and polyphase filtering are performed on the 4 fourth sequences to form a target time-domain data sequence. The target time-domain data sequence is transmitted on a time-frequency resource.

### Example four

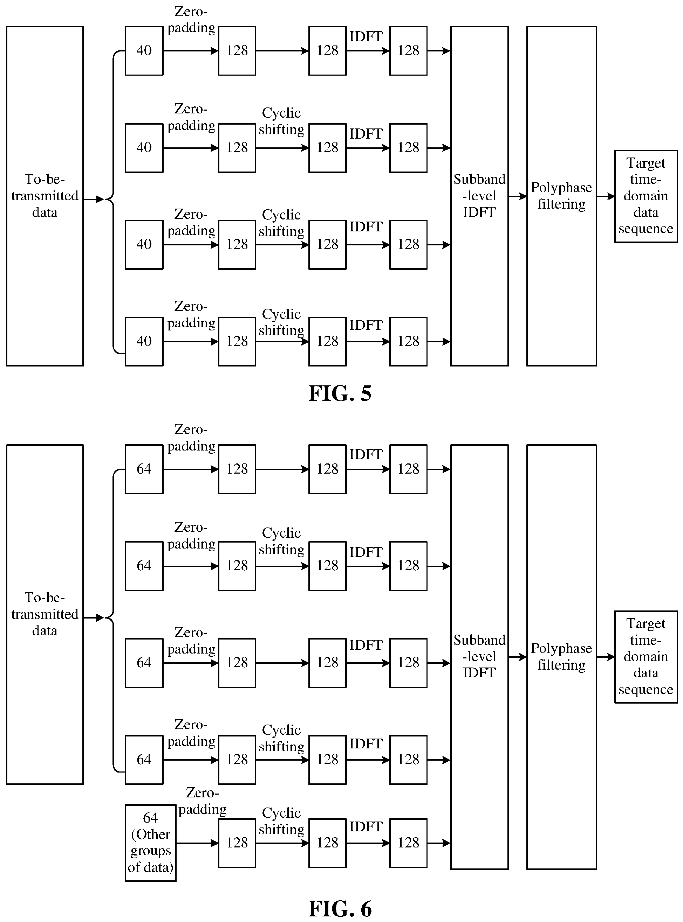

In an example, FIG. 5 is a flowchart of generating a target time-domain data sequence according to embodiments of the present application. This example describes the generation process of the target time-domain data sequence. In this example, 4 first sequences are provided, each first sequence includes 40 data elements, and the zero-padding length is 44 in zero-padding at both ends for each first sequence.

As shown in FIG. 5, the to-be-transmitted data is divided into 4 first sequences. Each first sequence includes 40 data elements. First, 44 zero subcarriers are added to each of both ends of each first sequence to form 4 second sequences, each second sequence having 128 points. It is assumed that the zero-frequency index of the channel bandwidth falls at the index of the zero subcarrier to which the first group of data is mapped during the inverse Fourier transform. The second group of data, the third group of data, and the fourth group of data are cyclically shifted backward by 40 data elements, cyclically shifted backward by 80 data elements, and cyclically shifted backward by 120 data elements respectively to obtain third sequences. Then, 128-point inverse Fourier transform is performed on the third sequences to form 4 fourth sequences. Subsequently, subband-level inverse Fourier transform and polyphase filtering are performed on the 4 fourth sequences to form a target time-domain data sequence. The target time-domain data sequence is transmitted on a time-frequency resource.

### Example five

In an example, FIG. 6 is a flowchart of generating a target time-domain data sequence according to embodiments of the present application. This example describes the generation process of the target time-domain data sequence. In this example, 4 first sequences are provided, each first sequence includes 64 data elements, and the zero-padding length is 32 in zero-padding at both ends for each first sequence.

As shown in FIG. 6, the to-be-transmitted data is divided into 4 first sequences. Each first sequence includes 64 data elements. First, 32 zero subcarriers are added to each of both ends of each first sequence to form 4 second sequences, each second sequence having 128 points. It is assumed that the zero-frequency index of the channel bandwidth falls at the index of the zero subcarrier to which the first group of data is mapped during the inverse Fourier transform. The second and fourth groups of data are cyclically shifted backward by 64 data elements to obtain third sequences. Then, 128-point inverse Fourier transform is performed on the third sequences to form 4 fourth sequences. Subsequently, subband-level inverse Fourier transform and polyphase filtering are performed on the 4 fourth sequences and other groups of data to form a target time-domain data sequence. Other groups of data include 64 data elements and are also subjected to zero-padding, cyclic shifting, inverse discrete Fourier transform (IDFT), and other operations before undergoing subband-level processing. The target time-domain data sequence is transmitted on a time-frequency resource.

### Example six

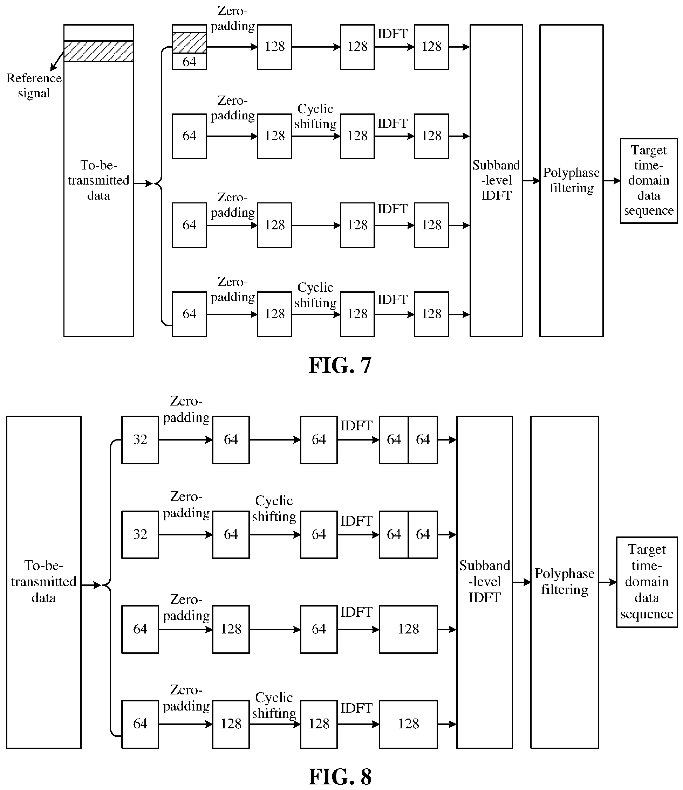

In an example, FIG. 7 is a flowchart of generating a target time-domain data sequence according to embodiments of the present application. This example describes the generation process of the target time-domain data sequence. In this example, 4 first sequences are provided, each first sequence includes 64 data elements, the first first sequence includes 32 reference signals, and the zero-padding length is 32 in zero-padding at both ends for each first sequence.

As shown in FIG. 7, the to-be-transmitted data is divided into 4 first sequences. Each first sequence includes 64 data elements. The first first sequence includes 32 reference signals. First, 32 zero subcarriers are added to each of both ends of each first sequence to form 4 second sequences, each second sequence having 128 points. It is assumed that the zero-frequency index of the channel bandwidth falls at the index of the zero subcarrier to which the first group of data is mapped during the inverse Fourier transform. The second and fourth groups of data are cyclically shifted backward by 64 data elements to obtain third sequences. Then, 128-point inverse Fourier transform is performed on the third sequences to form 4 fourth sequences. Subsequently, subband-level inverse Fourier transform and polyphase filtering are performed on the 4 fourth sequences to form a target time-domain data sequence. The target time-domain data sequence is transmitted on a time-frequency resource.

### Example seven

In an example, FIG. 8 is a flowchart of generating a target time-domain data sequence according to embodiments of the present application. This example describes the generation process of the target time-domain data sequence. In this example, 4 first sequences are provided, the first two first sequences each include 32 data elements, the last two first sequences each include 64 data elements, the zero-padding length is 16 in zero-padding at both ends for each of the first two first sequences, and the zero-padding length is 32 in zero-padding at both ends for each of the last two first sequences.

As shown in FIG. 8, the to-be-transmitted data is divided into 4 first sequences. Each of the first two first sequences includes 32 data elements. Each of the last two first sequences includes 64 data elements. First, 16 zero subcarriers are added to each of both ends of each of the first two first sequences to obtain corresponding second sequences, each second sequence having 64 points; and 32 zero subcarriers are added to both ends of each of the last two first sequences to obtain corresponding second sequences, each second sequence having 128 points. Thus, four second sequences are formed in total. It is assumed that the zero-frequency index of the channel bandwidth falls at the index of the zero subcarrier to which the first group of data is mapped during the inverse Fourier transform. The second group of data is cyclically shifted backward by 32 data elements, and the fourth group of data is cyclically shifted backward by 64 data elements to obtain corresponding third sequences. Then, 64-point inverse Fourier transform is performed on the first two third sequences, and 128-point inverse Fourier transform is performed on the last two third sequences. The first two groups of data are each concatenated with symbol data at a next time instant to form two groups of data each having a length of 128 points and together with the last two groups of data, form 4 fourth sequences each having 128 points. Subsequently, subband-level inverse Fourier transform and polyphase filtering are performed on the 4 fourth sequences to form a target time-domain data sequence. The target time-domain data sequence is transmitted on a time-frequency resource.

### Example eight

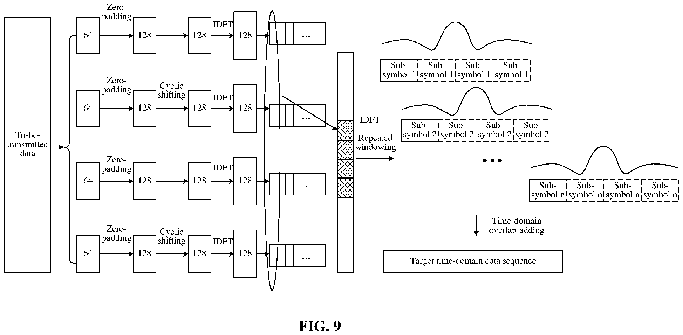

In an example, FIG. 9 is a flowchart of generating a target time-domain data sequence according to embodiments of the present application. This example describes the generation process of the target time-domain data sequence. In this example, 4 first sequences are provided, each first sequence includes 64 data elements, and the zero-padding length is 32 in zero-padding at both ends for each first sequence.

As shown in FIG. 9, the to-be-transmitted data is divided into 4 first sequences. Each first sequence includes 64 data elements. First, 32 zero subcarriers are added to each of both ends of each first sequence to form 4 second sequences, each second sequence having 128 points. It is assumed that the zero-frequency index of the channel bandwidth falls at the index of the zero subcarrier to which the first group of data is mapped during the inverse Fourier transform. The second group of data and the fourth group of data are each cyclically shifted backward by 64 data elements to obtain corresponding third sequences. Then, 128-point inverse Fourier transform is performed on the third sequences to form 4 fourth sequences. Subsequently, 4 data elements are selected from the 4 fourth sequences one to one. An oversampled 16-point inverse Fourier transform is performed on the 4 data elements to obtain sub-symbols. Each sub-symbol is then repeatedly extended by a factor of 4. Finally, 128 sub-symbols are concatenated in the time domain to form a target time-domain data sequence, where a concatenation interval is 8 points, that is, half the length of a sub-symbol. The target time-domain data sequence is transmitted on a time-frequency resource.

### Example nine

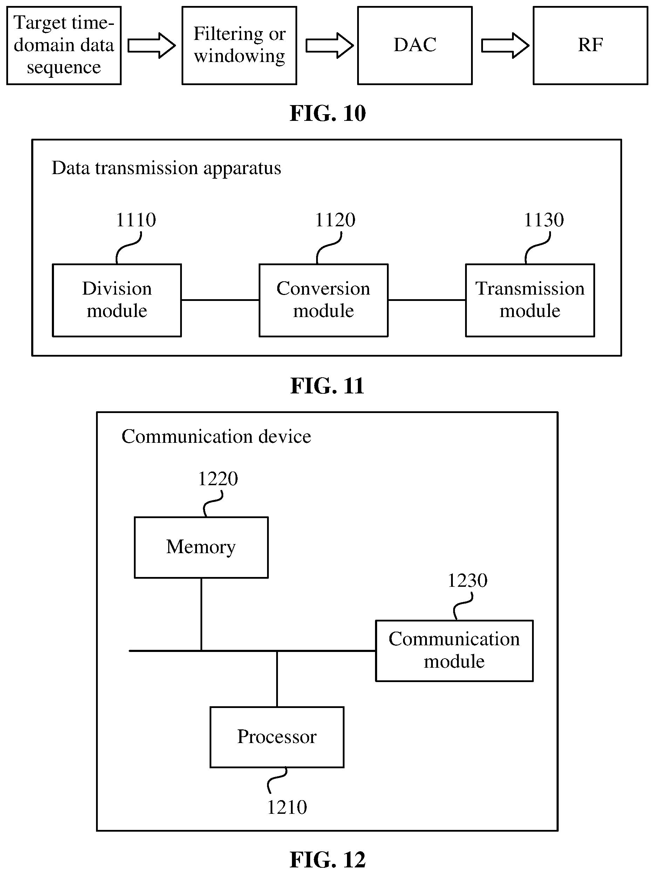

In an example, FIG. 10 is a flowchart of transmission of to-be-transmitted data according to embodiments of the present application. As shown in FIG. 10, windowing or filtering is performed on the to-be-transmitted data, followed by DAC and RF processing.

As shown in FIG. 10, transmitting the to-be-transmitted data also includes performing windowing or filtering on the to-be-transmitted data, followed by DAC and RF processing.

The windowing processing includes grouping a target time-domain data sequence corresponding to the to-be-transmitted data, performing periodic extension, performing pointwise multiplication with a preset function, and overlap-adding the groups.

The filtering is single-phase filtering or polyphase filtering. The polyphase filtering includes filtering each of the new N data sequences.

In an embodiment, FIG. 11 is a block diagram of a data transmission apparatus according to embodiments of the present application. As shown in FIG. 11, the data transmission apparatus of this embodiment includes a division module 1110, a conversion module 1120, and a transmission module 1130.

The division module 1110 is configured to divide to-be-transmitted data into N first sequences, where the n-th first sequence includes k(n) data elements, k(n) is a positive integer, n = 1, 2, ..., N, and N is an integer greater than or equal to 2.

The conversion module 1120 is configured to perform zero-padding at both ends, cyclic shifting, and inverse Fourier transform on the N first sequences in sequence to obtain a target time-domain data sequence.

The transmission module 1130 is configured to transmit the target time-domain data sequence on preconfigured a time-frequency resource.

In an embodiment, the conversion module 1120 includes a zero-padding unit, a shifting unit, a first transform unit, and a second transform unit.

The zero-padding unit is configured to perform zero-padding at both ends on the N first sequences separately to obtain N second sequences, where each second sequence includes M*s(n) data elements, M is a positive integer, and s(n) ≥ k(n). The shifting unit is configured to perform cyclic shifting on the N second sequences separately to obtain N third sequences. The first transform unit is configured to perform inverse Fourier transform on the N third sequences to obtain N fourth sequences. The second transform unit is configured to perform inverse Fourier transform on the N fourth sequences to form the target time-domain data sequence.

In an embodiment, a channel bandwidth includes N subbands that correspond to the N first sequences one to one.

In an embodiment, the cyclic shifting is performed within a range obtained after zero-padding at both ends of each first sequence, where the range of the cyclic shifting is greater than k(n).

In an embodiment, the cyclic shift amount of the n-th second sequence is related to the zero-frequency index of a channel bandwidth and the frequency-domain index corresponding to the n-th first sequence.

In an embodiment, in response to the zero-frequency index of a channel bandwidth falling within y(n) subcarrier indices preceding an index of a zero subcarrier to which a data element of the n-th first sequence is mapped during inverse Fourier transform, the n-th second sequence is circularly shifted backward by [y(n) mod M * s(n)] data elements, where y(n) is a real number greater than or equal to 0.

In an embodiment, in response to the zero-frequency index of a channel bandwidth falling within y(n) subcarrier indices following an index of a zero subcarrier to which a data element of the n-th first sequence is mapped during inverse Fourier transform, the n-th second sequence is circularly shifted forward by [y(n) mod M * s(n)] data elements, where y(n) is a real number greater than or equal to 0.

In an embodiment, in response to the cyclic shift amount of the n-th second sequence being[y(n) mod M * s(n)], no cyclic shifting is performed on the n-th second sequence.

In an embodiment, the zero-frequency index of the channel bandwidth satisfies one of the zero-frequency index of a baseband; or a zero-frequency index during the inverse Fourier transform on each third sequence.

In an embodiment, each first sequence includes k(n) data elements, and k(n) satisfies one of the following conditions: any positive integer; an integer multiple of one resource block (RB); 2 to the power of i; the ratio of two adjacent k(n) values is 2 to the power of i; or all k(n) values are the same.

In an embodiment, zero-padding at both ends is performed on each first sequence, and [M * s(n) - k(n)]/2 zero data elements are added to each end of each second sequence.

In an embodiment, the number of points for inverse Fourier transform on each third sequence satisfies one of the following conditions: the ratio of the numbers of points for inverse Fourier transform on two adjacent third sequences is 2 to the power of i; or the numbers of points for inverse Fourier transform on different third sequences are the same. i is an integer.

In an embodiment, performing inverse Fourier transform on the N fourth sequences to form the target time-domain data sequence includes performing frequency-domain zero-padding and cyclic shifting on P other initial frequency-domain data sequences in sequence to obtain P other target frequency-domain data sequences; and performing inverse Fourier transform on the N fourth sequences and the P other target frequency-domain data sequences to form the target time-domain data sequence. The P other target frequency-domain data sequences include data obtained by M-fold frequency-domain oversampling and are not included in data sequences generated from the to-be-transmitted data.

In an embodiment, performing inverse Fourier transform on the N fourth sequences to form the target time-domain data sequence includes for every N data elements, one oversampled inverse Fourier transform is performed, where the N data elements are from the N third sequences one to one.

In an embodiment, the target time-domain data sequence is formed by concatenating initial time-domain data sequences generated from inverse Fourier transforms on the fourth sequences, where the number of the initial time-domain data sequences is equal to the number of the inverse Fourier transforms on the fourth sequences.

In an embodiment, an inverse Fourier transform on the fourth sequences to form an initial time-domain data sequence includes extracting N data elements from the N fourth sequences, where the number of the N data elements is the same as the number of the first sequences, and each of the N data elements is from a respective one of the N third sequences; and performing an oversampled inverse Fourier transform on the N data elements to obtain the initial time-domain data sequence.

In an embodiment, a concatenation interval of the initial time-domain data sequences is 1/M of a length obtained after oversampled inverse Fourier transform on N target data elements.

In an embodiment, generating the initial time-domain data sequences by the inverse Fourier transforms on the fourth sequences includes for subbands having different subcarrier spacings, using the length of the fourth sequence corresponding to the subband with the minimum subcarrier spacing as a reference length; and for fourth sequences corresponding to subbands with non-minimum subcarrier spacings, selecting at least two fourth sequences, concatenating the at least two fourth sequences to form new N fourth sequences that each have a same length as the reference length, and performing inverse Fourier transforms on the new N fourth sequences to obtain the initial time-domain data sequences.

In an embodiment, each first sequence is transmitted within a frequency-domain resource block, and the frequency-domain resource block includes Z subcarriers; and the number of data elements in each of the N second sequences satisfies one of the following: M*s(n); or a value greater than or equal to M times the number of subcarriers in the frequency-domain resource block.

In an embodiment, a zero-frequency index during inverse Fourier transform on a third sequence is within the range of a corresponding frequency-domain resource block; and zero-frequency indices during inverse Fourier transform on different third sequences are different.

In an embodiment, a zero-frequency index during inverse Fourier transform falls at one subcarrier in a frequency-domain resource block.

In an embodiment, the frequency-domain resource blocks include all or some of the frequency-domain resource blocks within the channel bandwidth; and the to-be-transmitted data includes all or some of the to-be-transmitted data within the channel bandwidth.

In an embodiment, the data transmission method also includes filtering the target time-domain data sequence. The filtering includes one of single-phase filtering or polyphase filtering.

In an embodiment, a filter function used in the polyphase filtering includes one of the following: a root raised cosine function, a raised cosine function, a rectangular function, or an isotropic orthogonal transform algorithm (IOTA) function.

In an embodiment, the data transmission method also includes performing windowing on the target time-domain data sequence.

The data transmission apparatus of this embodiment is configured to perform the data transmission method of the embodiment shown in FIG. 1. The apparatus of this embodiment and the method of the embodiment shown in FIG. 1 have similar implementation principles and technical effects. The implementation principles and technical effects of the apparatus are not repeated here.

In an embodiment, FIG. 12 is a diagram illustrating the structure of a communication device according to embodiments of the present application. As shown in FIG. 12, the device of the present application includes a processor 1210, a memory 1220, and a communication module 1230. One or more processors 1210 may be provided in the device. FIG. 12 shows one processor 1210 as an example. One or more memories 1220 may be provided in the device. FIG. 12 shows one memory 1220 as an example. The processor 1210, the memory 1220, and the communication module 1230 of the device may be connected by a bus or otherwise. FIG. 12 uses connection by a bus as an example. In this embodiment, the communication device may be a base station or a terminal.

The memory 1220, as a computer-readable storage medium, may be configured to store software programs, computer-executable programs, and modules such as program instructions/modules corresponding to the device of any embodiment of the present application (such as the division module 1110, the conversion module 1120, and the transmission module 1130 in the data transmission apparatus). The memory 1220 may include a program storage region and a data storage region. The program storage region may store an operating system and an application program required by at least one function. The data storage region may store data created according to the use of the device. Additionally, the memory 1220 may include a highspeed random-access memory and may also include a nonvolatile memory such as at least one disk memory, a flash memory, or another nonvolatile solid-state memory. In some examples, the memory 1220 may be a memory remote relative to the processor 1210 and connectable to the device by a network. Examples of the network include, but are not limited to, the Internet, an intranet, a local area network, a mobile communication network, and a combination thereof. The communication module 1230 is configured for data exchange between multiple communication devices. The communication device may be configured to perform the communication transmission method of any previous embodiment and has corresponding functions and effects.

Embodiments of the present application also provide a storage medium storing computer-executable instructions which, when executed by a computer processor, cause the computer processor to perform a data transmission method. The method includes dividing to-be-transmitted data into N first sequences, where the n-th first sequence includes k(n) data elements, k(n) is a positive integer, n = 1, 2, ..., N, and N is an integer greater than or equal to 2; performing zero-padding at both ends, cyclic shifting, and inverse Fourier transform on the N first sequences in sequence to obtain a target time-domain data sequence; and transmitting the target time-domain data sequence on preconfigured a time-frequency resource.

It is to be understood by those skilled in the art that the term "user equipment" encompasses any suitable type of wireless user equipment, for example, a mobile phone, a portable data processing apparatus, a portable web browser, or a vehicle-mounted mobile station.

Generally speaking, embodiments of the present application may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present application is not limited thereto.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program operations, may represent interconnected logic circuits, modules, and functions, or may represent a combination of program operations and logic circuits, modules, and functions. Computer programs may be stored in a memory. The memory may be of any type suitable for a local technical environment and may be implemented using any suitable data storage technology, such as, but not limited to, a read-only memory (ROM), a random-access memory (RAM), or an optical memory device and system (for example, a digital video disc (DVD) or a compact disc (CD)). Computer-readable media may include non-transitory storage media. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

## Claims

1. A data transmission method, comprising:
dividing to-be-transmitted data into N first sequences, wherein an n-th first sequence comprises k(n) data elements, k(n) is a positive integer, n = 1, 2, ..., N, and N is an integer greater than or equal to 2;
performing zero-padding at both ends, and cyclic shifting, and inverse Fourier transform on the N first sequences in sequence to obtain a target time-domain data sequence; and
transmitting the target time-domain data sequence on a preconfigured time-frequency resource.

2. The method of claim 1, wherein performing zero-padding at both ends, cyclic shifting, and inverse Fourier transform on the N first sequences in sequence to obtain the target time-domain data sequence comprises:
performing zero-padding at both ends on the N first sequences separately to obtain N second sequences, wherein each second sequence comprises M*s(n) data elements, M is a positive integer, and s(n) ≥ k(n);
performing cyclic shifting on the N second sequences separately to obtain N third sequences;
performing inverse Fourier transform on the N third sequences separately to obtain N fourth sequences; and
performing inverse Fourier transform on the N fourth sequences to obtain the target time-domain data sequence.

3. The method of claim 1, wherein a channel bandwidth comprises N subbands that correspond to the N first sequences one to one.

4. The method of claim 2, wherein the cyclic shifting is performed within a range obtained after zero-padding at both ends of each first sequence, wherein the range of the cyclic shifting is greater than k(n).

5. The method of claim 2, wherein a cyclic shift amount of an n-th second sequence of the N second sequences is related to a zero-frequency index of a channel bandwidth and a frequency-domain index corresponding to an n-th first sequence of the N first sequences.

6. The method of claim 2, wherein in response to a zero-frequency index of a channel bandwidth falling within y(n) subcarrier indices preceding an index of a zero subcarrier to which a data element of the n-th first sequence is mapped during inverse Fourier transform, an n-th second sequence of the N second sequences is circularly shifted backward by [y(n) mod M * s(n)] data elements, wherein y(n) is a real number greater than or equal to 0.

7. The method of claim 2, wherein in response to a zero-frequency index of a channel bandwidth falling within y(n) subcarrier indices following an index of a zero subcarrier to which a data element of the n-th first sequence is mapped during inverse Fourier transform, an n-th second sequence of the N second sequences is circularly shifted forward by [y(n) mod M * s(n)] data elements, wherein y(n) is a real number greater than or equal to 0.

8. The method of claim 6 or 7, wherein in response to a cyclic shift amount of the n-th second sequence being [y(n) mod M * s(n)], no cyclic shifting is performed on the n-th second sequence.

9. The method of claim 3, wherein a zero-frequency index of the channel bandwidth satisfies:
a zero-frequency index of a baseband; or
a zero-frequency index during the inverse Fourier transform on each third sequence of the N third sequences.

10. The method of claim 2, wherein performing inverse Fourier transform on the N fourth sequences to form the target time-domain data sequence comprises:
performing frequency-domain zero-padding and cyclic shifting on P other initial frequency-domain data sequences in sequence to obtain P other target frequency-domain data sequences; and
performing inverse Fourier transform on the N fourth sequences and the P other target frequency-domain data sequences to form the target time-domain data sequence;
wherein the P other target frequency-domain data sequences comprise data obtained by M-fold frequency-domain oversampling and are not comprised in data sequences generated from the to-be-transmitted data.

11. The method of claim 2, wherein the target time-domain data sequence is formed by concatenating initial time-domain data sequences generated from inverse Fourier transforms on the fourth sequences, wherein a number of the initial time-domain data sequences is equal to a number of the inverse Fourier transforms on the fourth sequences.

12. The method of claim 11, wherein an inverse Fourier transform of the inverse Fourier transforms on the fourth sequences to form an initial time-domain data sequence of the initial time-domain data sequences comprises:
extracting N data elements from the N fourth sequences, wherein a number of the N data elements is the same as a number of the first sequences, and each of the N data elements is from a respective one of the N fourth sequences; and
performing an oversampled inverse Fourier transform on the N data elements to obtain the initial time-domain data sequence.

13. The method of claim 11, wherein a concatenation interval of the initial time-domain data sequences is 1/M of a length obtained after oversampled inverse Fourier transform on N target data elements.

14. The method of claim 11, wherein generating the initial time-domain data sequences by the inverse Fourier transforms on the fourth sequences comprises:
for subbands having different subcarrier spacings, using a length of a fourth sequence corresponding to a subband with a minimum subcarrier spacing as a reference length; and
for fourth sequences corresponding to subbands with non-minimum subcarrier spacings, selecting at least two fourth sequences, concatenating the at least two fourth sequences to form new N fourth sequences that each have a same length as the reference length, and performing inverse Fourier transforms on the new N fourth sequences to obtain the initial time-domain data sequences.

15. The method of claim 2, wherein
each first sequence is transmitted within a frequency-domain resource block, and the frequency-domain resource block comprises Z subcarriers; and
a number of data elements in each of the N second sequences is:
M*s(n); or
a value greater than or equal to M times a number of subcarriers in the frequency-domain resource block.

16. A communication device, comprising a memory and at least one processor, wherein
the memory is configured to store at least one program; and
when executed by the at least one processor, the at least one program causes the at least one processor to perform the data transmission method of any one of claims 1 to 15.

17. A storage medium storing a computer program which, when executed by a processor, causes the processor to perform the data transmission method of any one of claims 1 to 15.
